# EUROPÄISCHE PATENTSCHRIFT

(11) **EP 3 310 622 B1**
(45) Veröffentlichungstag und Bekanntmachung des Hinweises auf die Patenterteilung: **26.12.2018**
(21) Anmeldenummer: 16727626.0
(22) Anmeldetag: 02.06.2016
(51) Int. Cl.: B60R 16/037

(54) **PERSONALISIERUNG EINES FAHRZEUGS**
PERSONALIZATION OF A VEHICLE
PERSONNALISATION D'UN VÉHICULE

(30) Priorität: 17.06.2015 DE 102015007741
(43) Veröffentlichungstag der Anmeldung: 25.04.2018
(73) Patentinhaber: Daimler AG, 70327 Stuttgart (DE)
(72) Erfinder: FRITZ, Oliver, 73760 Ostfildern (DE); QUELL, Antonius, 71034 Böblingen (DE); SANTI, Marco, 71116 Gärtringen (DE); SCHILD, Susanne, 71116 Gärtringen (DE); VENNEBÖRGER, Stephan, 72072 Tübingen (DE); ZEDLER, Manja, 70563 Stuttgart (DE)
(74) Vertreter: JENSEN & SON
(86) Internationale Anmeldenummer: PCT/EP2016/000904
(87) Internationale Veröffentlichungsnummer: WO 2016/202431

(56) Entgegenhaltungen:
- DE-A1- 10 012 756
- US-A1- 2015 120 135

## Beschreibung

Die vorliegende Erfindung betrifft ein Verfahren zum Betreiben eines Fahrzeugs durch Bereitstellen mehrerer Profile, die jeweils nutzerspezifische Einstelldaten für das Fahrzeug beinhalten, initiales Auswählen eines der Profile und Wechseln und/oder Verwalten des jeweils ausgewählten Profils mittels einer Haupteinheit des Fahrzeugs. Darüber hinaus betrifft die vorliegende Erfindung eine entsprechende Steuervorrichtung für ein Fahrzeug mit einer Speichereinrichtung zum Bereitstellen mehrerer Profile, die jeweils nutzerspezifische Einstelldaten für das Fahrzeug beinhalten, einem Kombiinstrument und einer Haupteinheit zum Wechseln und/oder Verwalten des jeweils ausgewählten Profils.

Fahrzeuge wie PKW, LKW, Motorräder und dergleichen verfügen jeweils meist über ein sogenanntes Kombiinstrument. Darunter versteht man ein Kombinationsinstrument (englisch: Instrument Cluster), welches typischerweise aus einer Kombination eines Tachometers, eines Kilometerzählers, eines Drehzahlmessers, einer Tankanzeige, einer Kühlmitteltemperaturanzeige, mehrerer Kontrollleuchten und einer Fahrtrichtungsanzeige (Blinker) besteht. Das Kombiinstrument hat die Aufgabe, die grundlegenden Fahrzeugdaten während des Betriebs des Fahrzeugs an den Fahrer zu übermitteln. Dazu ist es notwendig, dass diese Informationen ohne große Verzögerung unmittelbar nach Betriebsbeginn zur Verfügung gestellt werden.

Gegebenenfalls werden durch das Kombiinstrument auch Zusatzfunktionen übernommen, wie etwa die Anzeige der Uhrzeit oder der Außentemperatur. Um all diese Informationen übersichtlich darstellen zu können, wird immer mehr von mechanischen Anzeigen abgegangen und es werden zunehmend elektronische Anzeigen eingesetzt.

Moderne Fahrzeuge verfügen neben einem Kombiinstrument auch über eine sogenannte Haupteinheit (englisch: Headunit). Diese dient in der Regel dazu, etwaige Audiodaten, Videodaten, Navigationsdaten oder dergleichen zu verarbeiten. Derartige Daten fallen insbesondere in sogenannten Infotainmentsystemen eines Fahrzeuges an. Unter einem solchen Infotainmentsystem versteht man in der Regel eine Kombination aus Autoradio, Navigationssystem, Freisprecheinrichtung, Fahrerassistenzsystemen und/oder weiteren Funktionen in einer zentralen Bedieneinheit. Die Haupteinheit stellt im Wesentlichen eine Recheneinheit zur Verarbeitung der Daten dar, die mit den genannten Funktionen in Verbindung stehen. Dazu ist in der Regel eine Hauptplatine mit Speicherbausteinen und CPU sowie DSPs oder dergleichen notwendig. Gegebenenfalls ist auch ein GPS-Empfänger oder dergleichen integriert.

Aus der Druckschrift DE 100 12 756 A1 ist ein Verfahren und eine Einrichtung zur Abspeicherung und Abrufung individueller Einstellungen bekannt. Die Einstellungen betreffen betriebsrelevante, elektrisch ein- oder verstellbare Elemente im Kraftfahrzeug, und die entsprechenden Daten werden mithilfe einer multifunktionalen Display-Darstellung wiedergegeben. Um hierbei zu erreichen, dass der jeweilige Benutzer auch die Sitzeinstellung sowie gegebenenfalls auch weitere Einstellungen personenbezogen bzw. auf sich selbst bezogen einfacher abrufen kann, wird bei Inbetriebnahme des Fahrzeugs auf einem Display eine Benutzeridentifikation oder Benutzerzuweisung erfragt, wobei entweder eine entsprechende vorhandene, d. h. bereits abgespeicherte Kennung einzugeben ist oder durch Tastenbetätigung eine Gastkennung erfolgt. Das Display für die Einstellungen befindet sich beispielsweise in der Mittelkonsole. Dort sind dann auch beispielsweise Grundeinstellungen für Klima- und Heizsysteme sowie Radiosender zu tätigen.

Eine Problematik der Haupteinheiten bzw. Infotainmentsysteme besteht darin, dass diese aufgrund ihrer Komplexität einen umfangreichen Initialisierungsvorgang erfordern. Dieses sogenannte Hochfahren kann mehrere Sekunden in Anspruch nehmen, was beim Start eines Fahrzeugs unter Umständen als sehr lange empfunden wird. Dementsprechend kann die Wahl des individuellen Profils von Einstelldaten erst nach dieser Initialisierungsphase ausgeführt werden. Möchte der Nutzer eine Profilauswahl ausführen, verzögert sich entsprechend der Fahrbeginn um eine Zeitspanne des Hochfahrens der Haupteinheit sowie der Wahl des entsprechenden Profils.

Die Aufgabe der vorliegenden Erfindung besteht somit darin, das Einstellen von personenbezogenen Daten in einem Fahrzeug zu beschleunigen.

Erfindungsgemäß wird diese Aufgabe durch ein Verfahren nach Anspruch 1 sowie eine Steuervorrichtung nach Anspruch 8 gelöst. Vorteilhafte Weiterbildungen der Erfindung ergeben sich aus den Unteransprüchen.

Entsprechend der Erfindung wird also ein Verfahren zum Betreiben eines Fahrzeugs durch Bereitstellen mehrerer Profile, die jeweils nutzerspezifische Einstelldaten für das Fahrzeug beinhalten vorgeschlagen. Jede Person, die das Fahrzeug benutzen will, kann auf diese Weise individuelle Einstelldaten hinterlegt bekommen. Auf diese Daten lässt sich dann einfach zugreifen, da sie zu einem Profil zusammengefasst sind. Zu Beginn des Betriebs des Fahrzeugs muss dementsprechend ein initiales Auswählen eines der Profile erfolgen. Dieses initiale Auswählen kann automatisch geschehen oder aber auch manuell durch eine entsprechende Eingabe des Fahrers bzw. Nutzers. Beim Betrieb des Fahrzeugs kann das Profil gewechselt werden, wenn beispielsweise ein Fahrerwechsel oder wenn eine andere Dynamik des Fahrzeugs gewünscht ist. Dieses Wechseln erfolgt typischerweise mittels der Haupteinheit des Fahrzeugs. Das Wechseln des Profils ist in der Regel nicht zeitkritisch, da zuvor das initial ausgewählte Profil für den Betrieb des Fahrzeugs genutzt wurde. Noch weniger zeitkritisch ist das Verwalten des jeweils ausgewählten Profils. Insoweit ist es durchaus angebracht, das Wechseln bzw. Verwalten der Profile über die Haupteinheit des Fahrzeugs zu erledigen. Demgegenüber erfolgt erfindungsgemäß das initiale Auswählen des einen der Profile mittels eines Kombiinstruments des Fahrzeugs. Das Kombiinstrument steht beim Start des Fahrzeugs meist sofort zur Verfügung, ohne dass es einer spürbaren Hochfahrphase bedarf. Insofern ist es erfindungswesentlich, dass das initiale Auswählen eines Profils beim Start des Betriebs des Fahrzeugs nicht mittels der Haupteinheit, sondern mithilfe des Kombiinstruments erfolgt.

Es ist anzumerken, dass alle durch einen Nutzer durchführbaren Einstellungen im Fahrzeug Teil von personalisierten Einstellungsdaten eines oder mehrerer der Profile sein können.

In einer Ausgestaltung wird das Wechseln und/oder Verwalten des jeweils ausgewählten Profils während des Betreibens des Fahrzeugs ausschließlich mittels der Haupteinheit des Fahrzeugs durchgeführt. Dadurch wird das Kombiinstrument nicht überfrachtet und die rechenintensiven Funktionen bleiben auf die Haupteinheit beschränkt. Dadurch verzögert sich auch der Start des Kombiinstruments durch diese Funktionen nicht.

Mindestens eines der Profile kann Einstelldaten für einen Sitz, ein Lenkrad und/oder einen Spiegel aufweisen. Damit kann eine spezifische Personalisierung des Fahrzeugs speziell für unterschiedlich große Personen erfolgen, die das gleiche Fahrzeug nutzen. In den jeweiligen Profilen werden dann die personenspezifischen Einstelldaten für Sitz, Lenkrad bzw. Spiegel gespeichert.
Mindestens eines der Profile kann darüber hinaus ein sogenanntes Einstellungsset aufweisen. Unter einem Einstellungsset werden hier Kombinationen von Einstelldaten verstanden, die an sich voneinander unabhängig sind. So kann beispielsweise in einem Einstellungsset ein bestimmtes Beleuchtungsprofil mit einem Fahrprogramm kombiniert werden. Auch solche Kombinationen können in den verschiedenen Profilen personenbezogen abgespeichert werden.

Des Weiteren kann mindestens eines der Profile Einstelldaten für ein individuelles Fahrprogramm und/oder ein vorbestimmtes Fahrprogramm und/oder eine Start-Stopp-Automatik aufweisen. In den Profilen können also neben Standardfahrprogrammen auch persönlich erstellte Fahrprogramme und andere Fahrfunktionen hinterlegt werden.

Vorzugsweise wird ein zuletzt aktiviertes Fahrprofil automatisch vorgewählt. Dies hat den Vorteil, dass ein Fahrer, der immer wieder das gleiche Fahrzeug benutzt, nicht bei jeder Benutzung das Profil aufwendig auswählen muss. Vielmehr kann sich das Fahrzeug dasjenige Profil "merken", welches zuletzt vor einem Neustart benutzt bzw. aktiviert wurde.

Die Benutzung eines Profils setzt auch das Aktivieren eines ausgewählten oder vorgewählten Profils voraus. In einer vorteilhaften Ausführungsform erfolgt das Aktivieren eines ausgewählten oder vorgewählten Profils automatisch durch einen Initialisierungsvorgangs des Fahrzeugs, wie zum Beispiel ein Einschalten der Zündung oder einen Motorstart des Fahrzeugs. Es ist in diesem Fall nicht notwendig, dass der Fahrer für das Aktivieren eines Profils ein zusätzliches Bedienelement betätigt. Vielmehr erfolgt die Aktivierung automatisch ausgelöst durch den Initialisierungsvorgang.

Zur Lösung obiger Aufgabe wird entsprechend der vorliegenden Erfindung auch eine Steuervorrichtung für ein Fahrzeug mit einer Speichereinrichtung zum Bereitstellen mehrerer Profile, die jeweils nutzerspezifische Einstelldaten für das Fahrzeug beinhalten zur Verfügung gestellt. Neben dieser Speichereinrichtung weist die Steuervorrichtung auch ein Kombiinstrument und eine Haupteinheit auf. Wie bei dem oben geschilderten Verfahren erfolgt auch hier das Wechseln und/oder Verwalten des jeweils ausgewählten Profils mithilfe der Haupteinheit, da dies zeitunkritisch ist. Das initiale Auswählen eines der Profile erfolgt jedoch durch das Kombiinstrument, das mit seinem vollen Funktionsumfang beim Initialisierungsvorgang eines Fahrzeugs nahezu unmittelbar zur Verfügung steht.

Vorzugsweise besitzt das Kombiinstrument einen Tachometer und/oder einen Kilometerzähler und/oder einen Drehzahlmesser und/oder eine Tankanzeige. Auch weitere Funktionen wie die Uhrzeit, Außentemperatur, Ölstandsanzeige usw. können in das Kombiinstrument integriert sein. Damit gibt das Kombiinstrument die wichtigsten Betriebsdaten des Fahrzeugs wieder.

In bevorzugter Ausgestaltung weist die Haupteinheit eine Recheneinheit für Audiodatenverarbeitung und/oder für Videodatenverarbeitung und/oder für Navigationsdatenverarbeitung auf. Damit wird über die Haupteinheit beispielsweise die Steuerung eines Autoradios, eines CD-Players, eines Displays und/oder eines Navigationssystems ermöglicht.

Die oben im Zusammenhang mit dem erfindungsgemäßen Verfahren geschilderten Verfahrensmerkmale können auch als funktionelle Merkmale der erwähnten Steuervorrichtung gesehen werden. Umgekehrt ergeben sich aus den erwähnten physischen Einheiten entsprechende Funktionen, welche auch als Verfahrensmerkmal realisiert werden können.

Die vorliegende Erfindung wird nun anhand der beigefügten Zeichnungen näher erläutert, in denen zeigen:
- Fig. 1: ein prinzipielles Ablaufdiagramm zum initialen Auswählen eines Profils mit Einstelldaten durch ein Kombiinstrument eines Fahrzeugs;
- Fig. 2: einen Menüpunkt zur Verwaltung von Profilen einer Haupteinheit eines Fahrzeugs und
- Fig. 3: eine prinzipielle Skizze eines Teils eines Kraftfahrzeugs mit Kombiinstrument und Haupteinheit.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in anderen technisch sinnvollen Kombinationen aber auch in Alleinstellung realisiert werden können.

Anhand der nachfolgenden Beispiele wird dargelegt, wie ein Fahrzeug bzw. Kraftfahrzeug personalisiert werden kann. Dabei werden im Fahrzeug die spezifisch für eine Person erstellten bzw. hinterlegten Daten für die Einstellung des Fahrzeugs verwendet. Die Einstelldaten werden dabei in einem jeweiligen personenbezogenen Profil abgelegt. Gegebenenfalls kann eine Person auch mehrere Profile nutzen. Unter Umständen können die Profile auch dynamisch angepasst werden, wobei beispielsweise ein persönlicher sogenannter "Last Mode" in einem Profil abgespeichert wird. Das Profil beinhaltet dann die Fahrzeugeinstellungen und -daten von der letzten Nutzung des Fahrzeugs durch die Person. Bei einer zukünftigen Fahrt können dann diese Fahrzeugeinstellungen und -daten, d. h. das Profil wieder aufgerufen werden.

Ein besonderer Mehrwert dieser Funktion des Einsatzes von Profilen ergibt sich insbesondere bei der Fahrzeugnutzung durch mehrere Fahrer. Jeder Fahrer hat günstiger Weise Zugriff auf ein eigenes Profil. So kann beispielsweise die Sitzeinstellung individuell erfolgen, wenn der Fahrer sein persönliches Profil mit den Sitzeinstelldaten gewählt hat. Ein Fahrer kann aber auch mehrere Profile besitzen, um beispielsweise unterschiedliche dynamische Fahreigenschaften des Fahrzeugs in entsprechend komponierter Weise zu verwenden.

In einem Profil können unterschiedliche Inhalte bzw. Daten hinterlegt werden, die die konkrete Personalisierung ausmachen. So können beispielsweise in einem Profil Fahrzeugeinstellungen bezüglich eines Sitzes, bezüglich des Lenkrads und/oder bezüglich des oder der Spiegel getroffen werden. Darüber hinaus können in einem Profil auch sogenannte Einstellungssets gespeichert werden. Dabei handelt es sich beispielsweise um Kombinationen von Einstelldaten eines Fahrzeugs. Konkret kann eine solche Einstellungskombination Längen- und Größenverstellungen der mechanischen Komponenten des Fahrzeugs, oder auch beispielsweise ein Fahrprogramm und/oder eine Lichteinstellung oder weitere Einstellungen betreffen.

Darüber hinaus können die Profile auch dazu genutzt werden, um für Profile Individualfahrprogramme zu konfigurieren. Im Gegensatz zu vorgegebenen Fahrprogrammen kann dabei jeder Fahrer sein jeweiliges Fahrprogramm individuell erstellen. Des Weiteren können in einem Profil auch Fahrprogramme mit anderen Funktionen wie beispielsweise die Start-Stopp-Automatik kombiniert werden. Gegebenenfalls können die Profile auch mit Zeitvorgaben kombiniert werden. So wäre es beispielsweise möglich, dass nach einem gewissen Zeitintervall der Start des Fahrzeugs nur mit einem Standardfahrprogramm möglich ist.

Die Auswahl und Verwaltung der Profile hat bei bekannten Verfahren stets mittels der Haupteinheit (Head Unit) erfolgt. Da jedoch die Haupteinheit ähnlich einem PC eine gewisse Zeit zum Hochfahren benötigt, da es sich ebenfalls um eine mehr oder weniger komplexe Recheneinheit handelt, ist zu Beginn des Betriebs eines Fahrzeugs bezüglich der Auswahl eines Profils mit entsprechenden Zeitverzögerungen zu rechnen. Daher ist erfindungsgemäß vorgesehen, dass die anfängliche bzw. initiale Profilauswahl unmittelbar nach dem Einsteigen in das Fahrzeug, zum Beispiel beim Einschalten der Zündung, noch vor einem Fahrvorgang des Fahrzeugs nicht mithilfe der Haupteinheit, sondern mithilfe des Kombiinstruments des Fahrzeugs erfolgt. Das Kombiinstrument ist in der Regel wesentlich rascher verfügbar als die Haupteinheit. Insofern kann die initiale Profilauswahl durch das Kombiinstrument bei Betriebsbeginn schneller erfolgen als bei der Auswahl mittels der Haupteinheit gemäß dem Stand der Technik.

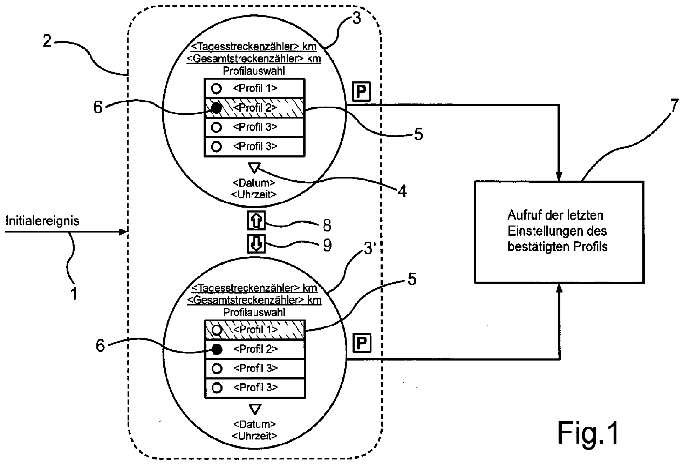

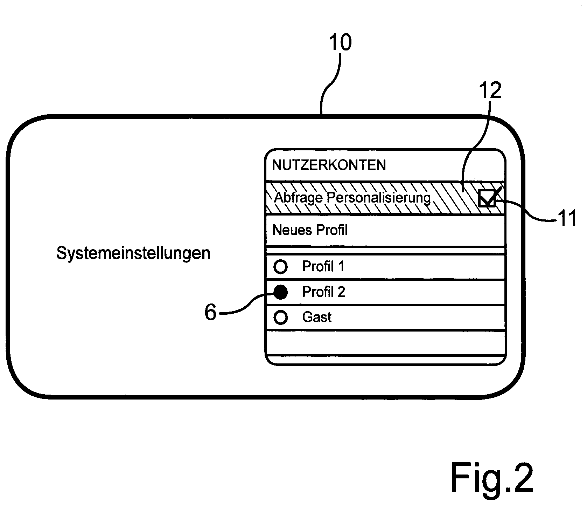

Anhand der Fig. 1 und 2 wird nun erläutert, wie die jeweiligen Profile ausgewählt, aktiviert und verwaltet werden können.

Fig. 1 zeigt ein entsprechendes Ablaufdiagramm zum initialen Auswählen eines Profils mithilfe eines Kombiinstruments. Ein Initialereignis 1 bewirkt eine Profilauswahl 2 über das Kombiinstrument. Bei dem Initialereignis 1 kann es sich um das Entriegeln eines Fahrzeugs, um das Öffnen einer Fahrzeugtür, um das Schließen einer Fahrzeugtür oder um das Einführen eines Zündschlüssels handeln. In jedem Fall wird durch das Initialereignis angedeutet, dass das Fahrzeug neu gestartet werden soll/könnte. Gegebenenfalls wird also das Kombiinstrument "aufgeweckt", um eine entsprechende Profilauswahl 2 zu ermöglichen.

Im Rahmen der Profilauswahl 2 kann das Kombiinstrument auf einem Display beispielsweise das Profilauswahlmenü 3 darstellen. Unter Umständen erfolgt die Darstellung des Profilmenüs eingebettet in andere dargestellte Daten. Im vorliegenden Beispiel werden oberhalb der Profilauswahl der Kilometerstand eines Tagestreckenzählers und der Kilometerstand eines Gesamtstreckenzählers wiedergegeben. Unterhalb der Profilauswahl wird in diesem Beispiel das Datum und die Uhrzeit angezeigt. Es können aber auch andere Daten oder aber auch keine Daten neben der Profilauswahl dargestellt werden.

Für die Profilauswahl werden hier unmittelbar vier direkt wählbare Profile "Profil 1" bis "Profil 4" dargestellt. Dass weitere Profile aufrufbar sind, wird über einen Pfeil 4 angezeigt.

Der Cursor für das Auswählen ist hier grafisch so gestaltet, dass das jeweilige Kästchen, das eines der Profile repräsentiert, mit einer speziellen Farbe oder Beleuchtung gekennzeichnet ist. In dem Menü 3 von Fig. 1 steht der Cursor 5 auf <Profil 2>. Würde nun eine entsprechende Bestätigungstaste oder ein Bestätigungsfeld gedrückt werden, was in Fig. 1 durch das Symbol "P" repräsentiert ist, so würden die Einstelldaten von Profil 2 in eine entsprechende Steuerung geladen oder vom Fahrzeug anders genutzt werden.

In dem Menü 3 wird außerdem als optionale Hilfsfunktion durch einen Punkt 6 dasjenige Profil gekennzeichnet, das zuletzt ausgewählt wurde. Diese optionale Hilfsfunktion zeigt also an, welches Profil bzw. welche Einstelldaten oder welches Einstellset zuvor gewählt wurden. Beim Pressen "P" der genannten Betätigungseinheit erfolgt also hier, da der Cursor 5 mit dem Markierungspunkt 6 beide auf <Profil 2> stehen, ein Wiederaufruf 7 der letzten Einstellungen des bestätigten Profils.

Soll nun ein anderes Profil manuell gewählt werden, so sind entsprechende Cursortasten 8, 9 zu betätigen oder entsprechende Wischbewegungen durchzuführen oder gewünschte Menüpositionen anzutippen. Entsprechend der Menüdarstellung 3' wurde der Cursor 5 hier beispielhaft auf <Profil 1> geführt. Der Punkt 6 markiert nach wie vor das zuletzt gewählte Profil <Profil 2>. Wird also durch ein Pressen "P" eines Bestätigungsknopfes oder durch eine sonstige Bestätigungsaktion die Menüauswahl von Menü 3' bestätigt, so wird nicht das vorausgewählte Profil 2 (vgl. Punkt 6), sondern das mit dem Cursor 5 aktuell ausgewählte <Profil 1> gemäß Bezugszeichen 7 aufgerufen, wobei das bestätigte Profil durch die zuletzt vorgenommenen Einstellungen charakterisiert ist.

In dem Kombiinstrument ist lediglich eine erste also initiale Auswahl eines Profils mit Einstelldaten und dergleichen möglich. Soll hingegen das Profil während des Betriebs gewechselt oder anderweitig verwaltet werden, so ist dies vorzugsweise nur mithilfe der Haupteinheit (Head Unit) des Fahrzeugs möglich. Diese Head Unit der eingangs genannten Art bietet beispielsweise ein spezielles Menü 10 zum Aufrufen und Verwalten von Profilen zum Beispiel gemäß Fig. 2. Ein dortiger Untermenüpunkt bezieht sich auf Nutzerkonten, wo die einzelnen Profile aufgerufen bzw. verwaltet werden können. Im vorliegenden Beispiel kann in dem Menü der Nutzerkonten eingestellt werden, ob bei einem Start des Fahrzeugs eine Abfrage der Personalisierung erfolgen soll oder nicht. Falls dies gewünscht ist, kann ein entsprechender Haken 11 gesetzt werden, indem der Cursor 12 auf den entsprechenden Menüpunkt "Abfrage Personalisierung" gesetzt wird und durch eine Bestätigungshandlung gesetzt oder zurückgenommen wird.

Ein weiterer Menüpunkt betrifft das Anlegen eines neuen Profils. Dazu ist der Cursor 12 auf den Menüpunkt "neues Profil" zu setzen. Anschließend muss dieser Menüpunkt bestätigt werden, und es müssen entsprechende Profileingaben getätigt werden.

Als weitere Menüpunkte in dem Menü 10 sind beispielsweise die einzelnen Profile "Profil 1", "Profil 2" und "Gast" zur Auswahl dargestellt. Für einen Wechsel des momentan aktiven Profils ist das gewünschte Profil mit dem Cursor 12 anzusteuern und zu bestätigen. Auch hier kann das zuletzt vor dem Neustart benutzte Profil durch einen Punkt 6 gekennzeichnet sein. Alternativ kann auch das momentan aktive Profil durch den Punkt 6 markiert sein.

Die in den Fig. 1 und 2 dargestellten Menüs sind rein beispielhaft. Die Menüs können auch ein anderes Layout oder eine andere Struktur aufweisen oder anders benannt sein.

In erfinderischer Weise erfolgt also eine initiale Auswahl eines der Profile durch das Kombiinstrument des Fahrzeugs, wohingegen ein Wechsel oder eine Verwaltung der Profile in der Haupteinheit des Infotainmentsystems des Fahrzeugs erfolgt. Inhalte wie Fahrzeugeinstellungen (bezüglich Sitz, Lenkrad und Spiegel), Einstellungssets, individuelle Fahrprogramme, Standardfahrprogramme und Start-Stopp-Automatik oder dergleichen können in dem jeweiligen Profil abgespeichert werden.

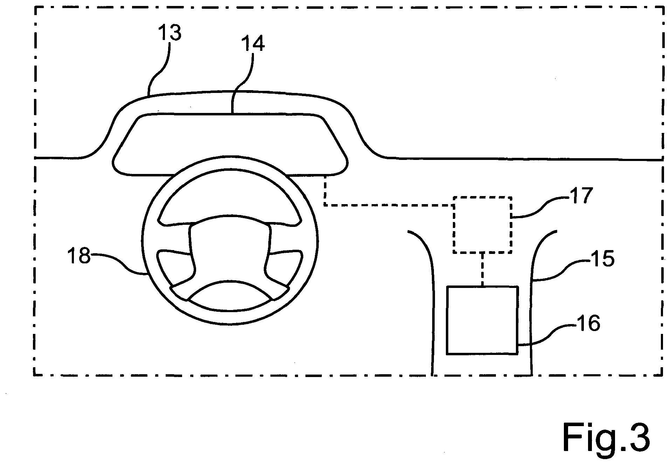

In Fig. 3 ist schematisch ein Beispiel einer Steuervorrichtung für ein Fahrzeug dargestellt. In einem Armaturenbrett 13 ist ein Kombiinstrument 14 angeordnet. Eine Mittelkonsole 15 des Fahrzeugs beherbergt eine Haupteinheit 16, die hier durch ihren Bildschirm repräsentiert wird. Sowohl die Haupteinheit 16 als auch das Kombiinstrument 14 greifen auf eine Speichereinrichtung 17 zu, in der die oben genannten Profile, mit denen das Fahrzeug individuell einstellbar ist, abgelegt sind. In einem solchen Profil ist beispielsweise die Höheneinstellung eines Lenkrads 18 oder ein bevorzugtes Fahrprogramm bzw. dessen Kennzeichnung abgelegt. Um das Fahrzeug rascher neu starten zu können, erfolgt das initiale Auswählen eines Profils beim Neustart durch das Kombiinstrument 14, während ein Wechsel des Profils oder eine Verwaltung der Profile durch die Haupteinheit 16 durchgeführt wird.

## Patentansprüche

1. Verfahren zum Betreiben eines Fahrzeugs durch
- Bereitstellen mehrerer Profile, die jeweils nutzerspezifische Einstelldaten für das Fahrzeug beinhalten,
- initiales Auswählen (2) eines der Profile und
- Wechseln und/oder Verwalten des jeweils ausgewählten Profils mittels einer Haupteinheit (16) des Fahrzeugs,
**dadurch gekennzeichnet, dass**
- das initiale Auswählen (2) des einen der Profile mittels eines Kombiinstruments (14) des Fahrzeugs erfolgt.

2. Verfahren nach Anspruch 1,
**dadurch gekennzeichnet, dass**
das Wechseln und/oder Verwalten der Profile während des Betreibens des Fahrzeugs innerhalb des Fahrzeugs ausschließlich mittels der Haupteinheit (16) des Fahrzeugs durchgeführt wird.

3. Verfahren nach Anspruch 1,
**dadurch gekennzeichnet, dass**
mindestens eines der Profile Einstelldaten für einen Sitz, ein Lenkrad (18) und/oder einen Spiegel aufweist.

4. Verfahren nach Anspruch 1 oder 2,
**dadurch gekennzeichnet, dass**
mindestens eines der Profile ein Einstellungsset aufweist.

5. Verfahren nach einem der vorhergehenden Ansprüche,
**dadurch gekennzeichnet, dass**
mindestens eines der Profile Einstelldaten für ein individuelles Fahrprogramm und/oder ein vorbestimmtes Fahrprogramm und/oder eine Start-Stopp-Automatik aufweist.

6. Verfahren nach einem der vorhergehenden Ansprüche,
**dadurch gekennzeichnet, dass**
ein zuletzt aktiviertes Profil (6) automatisch vorgewählt wird.

7. Verfahren nach einem der vorhergehenden Ansprüche,
**dadurch gekennzeichnet, dass**
ein ausgewähltes oder vorgewähltes Profil automatisch durch Einschalten der Zündung des Fahrzeugs aktiviert wird.

8. Steuervorrichtung für ein Fahrzeug mit
- einer Speichereinrichtung (17) zum Bereitstellen mehrerer Profile, die jeweils nutzerspezifische Einstelldaten für das Fahrzeug beinhalten,
- einem Kombiinstrument (14) und
- einer Haupteinheit (16) zum Wechseln und/oder Verwalten des jeweils ausgewählten Profils,
**dadurch gekennzeichnet, dass**
- das Kombiinstrument (14) zum initialen Auswählen eines der Profile ausgebildet ist.

9. Steuervorrichtung nach Anspruch 8,
**dadurch gekennzeichnet, dass**
das Kombiinstrument (14) einen Tachometer und/oder einen Kilometerzähler und/oder einen Drehzahlmesser und/oder eine Tankanzeige aufweist.

10. Steuervorrichtung nach Anspruch 8 oder 9,
**dadurch gekennzeichnet, dass**
die Haupteinheit eine Recheneinheit für Audiodatenverarbeitung und/oder für Videodatenverarbeitung und/oder für Navigationsdatenverarbeitung aufweist.

## Claims

1. Method for operating a vehicle by
- the provision of several profiles, each containing user-specific adjusting data for the vehicle,
- the initial selection (2) of one of the profiles and
- the changing and/or administration of the respectively selected profile by means of a main unit (16) of the vehicle,
**characterised in that**
- the initial selection (2) of one of the profiles is carried out by means of an instrument cluster (14) of the vehicle.

2. Method according to claim 1,
**characterised in that**
the changing and/or administration of the profiles during the operation of the vehicle is/are carried out within the vehicle exclusively by means of the main unit (16) of the vehicle.

3. Method according to claim 1,
**characterised in that**
at least one of the profiles contains adjusting data for a seat, a steering wheel (18) and/or a mirror.

4. Method according to claim 1 or 2,
**characterised in that**
at least one of the profiles comprises an adjustment set.

5. Method according to any of the preceding claims,
**characterised in that**
at least one of the profiles contains adjusting data for an individual driving programme and/or a predetermined driving programme and/or automatic starting/stopping.

6. Method according to any of the preceding claims,
**characterised in that**
a last-activated profile (6) is automatically preselected.

7. Method according to any of the preceding claims,
**characterised in that**
a selected or preselected profile is automatically activated by switching on the ignition of the vehicle.

8. Control device for a vehicle with
- a memory device (17) for the provision of several profiles, each containing user-specific adjusting data for the vehicle,
- an instrument cluster (14) and
- a main unit (16) for the changing and/or administration of the respectively selected profile,
**characterised in that**
- the instrument cluster (14) is designed for the initial selection of one of the profiles.

9. Control device according to claim 8,
**characterised in that**
the instrument cluster (14) comprises a speedometer and/or an odometer and/or a tachometer and/or a tank indicator.

10. Control device according to claim 8 or 9,
**characterised in that**
the main unit comprises a calculating unit for audio data processing and/or for video data processing and/or for navigation data processing.

## Revendications

1. Procédé de fonctionnement d'un véhicule automobile par
- la fourniture de plusieurs profils qui contiennent respectivement les données de réglages spécifiques à l'utilisateur, pour le véhicule automobile,
- la sélection initiale (2) d'un des profils et
- le changement et/ou la gestion du profil respectif choisi au moyen d'une unité principale (16) du véhicule automobile,
**caractérisé en ce que**
- la sélection initiale (2) de l'un des profils s'effectue au moyen d'un instrument combiné (14) du véhicule automobile.

2. Procédé selon la revendication 1, **caractérisé en ce que**
le changement et/ou la gestion des profils pendant le fonctionnement du véhicule automobile s'effectue à l'intérieur du véhicule automobile exclusivement à l'aide de l'unité principale (16) du véhicule automobile.

3. Procédé selon la revendication 1, **caractérisé en ce qu'** au moins l'un des profils présente des données de réglage pour un siège, un volant de direction (18) et/ou un miroir.

4. Procédé selon la revendication 1 ou la revendication 2, **caractérisé en ce qu'** au moins l'un des profils présente un ensemble de réglage.

5. Procédé selon l'une quelconque des revendications précédentes, **caractérisé en ce qu'**
au moins l'un des profils présente des données de réglage pour un programme de conduite individuel et/ou un programme de conduite prédéfini et/ou un système automatique start/stop.

6. Procédé selon l'une quelconque des revendications précédentes, **caractérisé en ce qu'**un profil (6) activé en dernier est automatiquement présélectionné.

7. Procédé selon l'une quelconque des revendications précédentes, **caractérisé en ce qu'**un profil sélectionné ou présélectionné est activé automatiquement par la mise en marche de l'allumage du véhicule.

8. Dispositif de commande pour un véhicule automobile comprenant
- un dispositif mémoire (17) destiné à fournir plusieurs profils qui contiennent respectivement des données de réglage spécifiques à l'utilisateur, pour le véhicule,
- un instrument combiné (14) et
- une unité principale (16) destiné à modifier et/ou à gérer le profil respectif sélectionné, **caractérisé en ce que**
- l'instrument combiné (14) est conçu pour procéder à une sélection initiale d'un des profils.

9. Dispositif de commande selon la revendication 8, **caractérisé en ce que** l'instrument combiné (14) présente un tachymètre et/ou un compteur kilométrique et/ou un compte-tours et/ou une jauge à carburant.

10. Dispositif de commande selon la revendication 8 ou la revendication 9, **caractérisé en ce que** l'unité principale présente une unité de calcul pour le traitement des données audio et/ou pour le traitement des données vidéo et/ou pour le traitement des données de navigation.
